# EUROPÄISCHE PATENTSCHRIFT

(11) **EP 0 628 086 B1**
(45) Veröffentlichungstag und Bekanntmachung des Hinweises auf die Patenterteilung: **03.09.1997**
(21) Anmeldenummer: 94903821.0
(22) Anmeldetag: 17.12.1993
(51) Int. Cl.: C21C 5/52, F27B 3/06

(54) **KIPPVORRICHTUNG FÜR EINEN GLEICHSTROMLICHTBOGENOFEN UND VERFAHREN ZUM ENTLEEREN DES OFENS**
TILTING DEVICE FOR A DIRECT CURRENT ARC FURNACE AND PROCESS FOR EMPTYING THE FURNACE
BASCULEUR DE FOUR A ARC A COURANT CONTINU ET PROCEDE DE VIDAGE DU FOUR

(30) Priorität: 24.12.1992 DE 4244228
(43) Veröffentlichungstag der Anmeldung: 14.12.1994
(73) Patentinhaber: MAN Gutehoffnungshütte Aktiengesellschaft, 46145 Oberhausen (DE)
(72) Erfinder: GUIDO, Heinz, D-47259 Duisburg (DE)
(86) Internationale Anmeldenummer: EP9303596
(87) Internationale Veröffentlichungsnummer: WO9414983

(56) Entgegenhaltungen:
- WO-A-90/06481
- DE-A- 2 610 777
- DE-B- 1 038 719
- DE-B- 1 042 181

## Beschreibung

Die Erfindung betrifft eine Kippvorrichtung für einen Gleichstromlichtbogenofen mit außermittiger Bodenabstichöffnung und die Kippbewegung mitmachenden Elektroden, dessen Ofengefäß eine seitliche Öffnung und eine Einrichtung zum kontinuierlichen Einbringen von Schrott aufweist, wobei die Kippvorrichtung aus unterhalb des Gefäßrahmens angeordneten Rollwiegen besteht, die auf fest auf dem Fundamentrahmen des Ofenfundamentes angebrachten Laufrollen gelagert sind und die mittels hydraulischer Kraftantriebe bewegbar sind.

Die Erfindung betrifft ferner ein Verfahren zum vollständigen Entleeren des Ofens mit Hilfe der genannten Kippvorrichtung.

Lichtbogenöfen zur Erzeugung von Stahl werden mit einer Vorrichtung versehen, die das Kippen des Ofengefäßes zur Entleerung der Schmelze in ein Gießgefäß, beispielsweise eine Stahlgießpfanne, und zum Abschlacken ermöglicht.

Bekannt sind zum einen Ausführungen, bei denen das Ofengefäß in einem Gefäßrahmen sitzt, der auf mindestens zwei Kippwiegen aufliegt. Beim Kippen des Ofens rollt die verzahnte, meist kreisförmig ausgeführte Kippwiege auf einem horizontalen, ebenfalls verzahnten Unterbau ab.

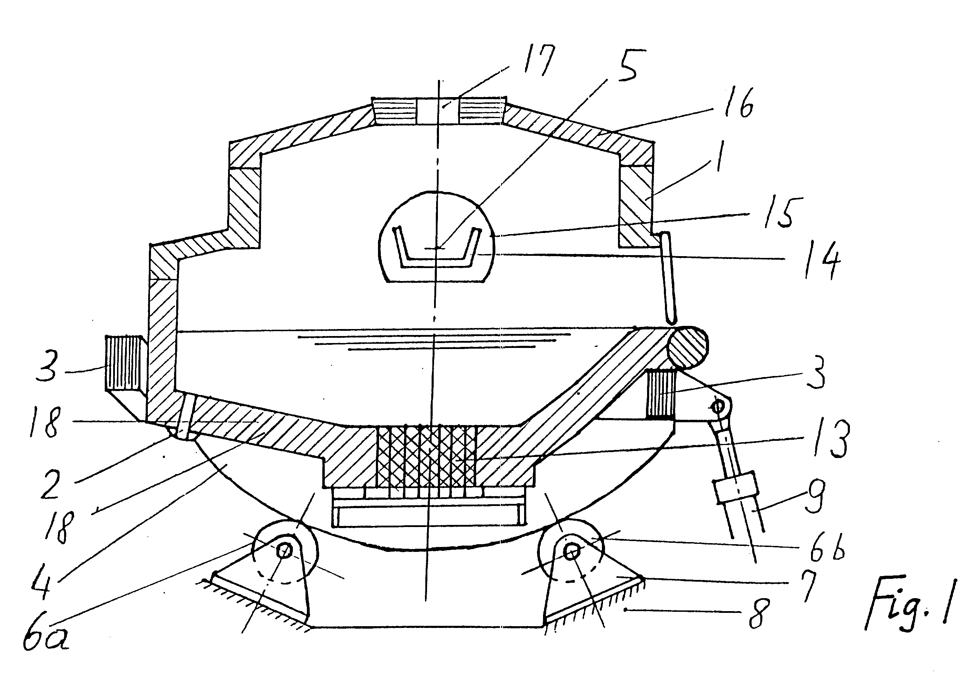

Bei einer anderen bekannten Ausführung, entsprechend der Ausführung nach Fig. 1, wird die Kippwiege des Ofens so ausgeführt, daß diese auf Rollen gelagert ist und durch eine Antriebsvorrichtung sowohl in die Abstich- als auch Abschlackposition gekippt wird.

Aus der DE-AS-1.084.445 ist eine Vorrichtung zum Kippen von elektrischen Lichtbogenöfen bekannt, bei der die Elektroden die Kippbewegung nicht mitmachen. Das Kippen des Ofengefäßes mit einer Ausgußschnauze wird mit Hilfe einer beim Kippen verfahrbaren Wälzbahn erreicht, auf der die Wälzwiege abrollt.

Die Wälzwiege weist jeweils seitlich angeordnete Führungsleisten auf, die sich bei Bewegung des unter der Wälzwiege befindlichen Wagens aus der Normalstellung heraus gegen die Rollen anlegen.

Beim Kippen des Gefäßes für den Abstich des geschmolzenen Stahles legt sich die rechte Führungsleiste gegen die rechte Rolle und bewirkt dadurch das Kippen des Gefäßes in einem bestimmten Bereich um den oberen Drehpunkt.

Beim weiteren Bewegen des Wagens/Wälzbahn nach rechts erfolgt dann das Kippen in einen Drehpunkt, der sich in der Nähe des Schwerpunktes des Ofengefäßes befindet. Dabei bewegt sich die Führungsleiste weiter an der rechten Rolle entlang, jedoch auf der geraden Strecke der Führungsleiste.

Der Wagen unterhalb der Wälzwiege hat sowohl eine tragende als auch eine bewegende Funktion. Die beidseitig gelagerten Rollen haben keine tragende Funktion, sondern dienen nur der Führung.

Nachteilig bei dem als erstgenannter Stand der Technik angewandten Prinzip ist, daß sich dort entsprechend der Kippgeometrie und des Abrollverhaltens der Kippwiegen auf dem horizontalen Unterbau der Ofenmittelpunkt verlagert und je nach der Kippbewegung des Ofengefäßes entweder in Richtung Abstichseite oder in Richtung Abschlackseite wandert. Ofenmittelpunkt und Mittelpunkt der Kippwiege bilden einen Abstand, der konstruktiv durch die Größe des Abstichgewichtes bestimmt wird.

Ein Nachteil bei dem zweitgenannten Stand der Technik besteht darin, daß sich während des Kippens die im Gefäßrahmen angeordnete Boden-Abstichvorrichtung bei Entleeren des Stahles aus dem Ofengefäß in Richtung Ofenmitte verlagert. Dies hat zur Folge, daß sich die in einem Stahlentnahmewagen stehende Stahlgießpfanne entsprechend der Kippbewegungen des Lichtbogenofens während des Abstiches in Richtung Ofenmitte bewegen muß. Dies bedeutet, daß Wagen und Pfanne weiter unter den Ofen gefahren werden müssen, vor allem wenn das Ofengefäß komplett entleert werden muß und kein Sumpf im Ofengefäß verbleiben darf.

Ein Nachteil bei dem letztgenannten Stand der Technik besteht darin, daß zum Kippen des Gefäßes, auch bei einem kleinen Kippbereich, die Elektroden aus dem Gefäß gezogen werden müssen.

Diese Kippvorrichtung erlaubt zwar ein vollständiges Entleeren des Ofengefäßes, die konstruktive Ausführung ist jedoch sehr aufwendig, da ein bzw. zwei verfahrbare Wagen/Wälzbahnen mit hydraulischem Antrieb und einer weit ausladenden Tragkonstruktion für den Fahrweg des Wagens erforderlich ist, die für einen Gleichstromlichtbogenofen mit am Unterteil des Gefäßes angebrachten Versorgungsvorrichtungen für eine Bodenelektrode nicht einsetzbar ist.

Bei einem Gleichstromlichtbogenofen sind dem Fahrweg des Stahlentnahmewagens mit der darin befindlichen Stahlgießpfanne konstruktive Grenzen gesetzt, da unter dem Boden des Ofengefäßes die Einrichtungen für den Stromanschluß und die Kühlvorrichtungen für die Bodenelektrode installiert sind. Diese Einrichtungen müssen zusätzlich vor der Strahlungshitze des flüssigen Stahles in der Stahlgießpfanne geschützt werden.

Die bekannte Kippvorrichtung nach dem erstgenannten Stand der Technik kann auch dann nicht verwendet werden, wenn der Lichtbogenofen durch eine Öffnung in der Seitenwand im Bereich des Kippmittelpunktes kontinuierlich über eine feststehende, abgedeckte Schurre mit vorgewärmtem Schrott versorgt werden soll und wenn gleichzeitig zur Vorwärmung des zu chargierenden Schrottes die heißen Abgase durch die Abdeckung der Schurre abgesaugt werden sollen.

Die Aufgabe der Erfindung besteht darin, eine Kippvorrichtung für einen Gleichstromlichtbogenofen zu schaffen, bei der während des Kippens zum vollständigen Entleeren des Ofens die Bodenabstichöffnung des Ofengefäßes möglichst geringfügig verlagert wird. Soll nur bis zu einem Bereich zwischen ± 5° und ± 15° gekippt werden, so darf sich die Bodenabstichöffnung verlagern, es muß jedoch der Rollmittelpunkt des Ofengefäßes in einer vorgegebenen Position verharren.

Die Lösung der Aufgabe erfolgt in der Weise, wie es in den Vorrichtungs-ansprüchen 1 und 3 und im Verfahrensansprüch 4 angegeben ist.

Ausgehend von der Überlegung, daß für den normalen Ofenbetrieb bei Sumpffahrweise während des Stahlabstiches durch die im Boden befindliche Abstichöffnung in die Stahlgießpfanne und während des Abschlackens in den unterhalb des Ofens stehenden Schlackenkübel nur eine begrenzte Kippbewegung von ± 5° bis ± 15° erforderlich ist und die Schrottschurre auch bei dieser Betriebsweise und während des Einschmelzens in der Öffnung des Ofengefäßes verbleiben muß, ist es erforderlich, den Ofen nur im Bereich dieser begrenzten Kippbewegung um den Rollmittelpunkt, der gleichzeitig auch der Schurrenmittelpunkt ist, zu kippen.

Muß der Ofen für eine vollständige Entleerung weiter gekippt werden, dann ist der Einschmelzvorgang unterbrochen, der Lichtbogenofen wird auch nicht mehr mit vorgewärmtem Schrott beschickt, es werden keine heißen Abgase mehr abgesaugt und die Schurre kann aus dem Ofen herausgefahren werden. Dann ist es möglich, für die weitere Kippbewegung durch die erfindungsgemäße Vorrichtung eine Kinematik zu wählen, mit der sich erreichen läßt, daß das Abstichloch sich nicht weiter zum Ofenmittelpunkt bewegt.

Die erfindungsgemäße Vorrichtung zur Durchführung des Verfahrens zeichnet sich dadurch aus, daß an die auf den beiden Laufrollen lagernde kreisbogenförmige Rollwiege des Gefäßrahmens im ± Null-Grad Kipp-Bereich ein Nocken angebracht ist, der bei Überschreiten eines Kippbereiches von z.B. + 10° an der Laufrolle an der Abschlackseite anliegt und an dieser entlanggleitet, und daß der Gefäßrahmen auf der Abschlackseite des Ofengefäßes gelenkig mit einem Hydraulikzylinder verbunden ist und einseitig angehoben wird. Beide Laufrollen sind in einem auf dem Ofenfundament aufliegenden Fundamentrahmen drehbar gelagert.

An der auf den beiden Laufrollen gelagerten Rollwiege ist mittig ein Nocken angebracht, dessen Kontur auf der Seite der Bodenabstichöffnung z.B. senkrecht und parallel zur Mittelachse des Rollmittelpunktes verlaufen kann. Die Abrollkurve des Rollwiegennockens verläuft zunächst in einer Geraden, die sich später an den Kreisbogenradius der Kippwiege anschmiegt. Der Übergangsradius des Nockens zur Rollwiege des Ofengefäßes weist einen Radius auf, der dem 1,1-fachen bis 3,0-fachen Radius der Laufrollen entspricht.

Die erfindungsgemäße Vorrichtung zeichnet sich dadurch aus, daß die Abrollkurve der Rollwiege bei einem Kippbereich des Ofengefäßes von ± 5° bis ± 15° einem Kreisbogen entspricht und beim Kippen des Gefäßes die Lage des Rollmittelpunktes nicht verändert wird. Die Abrollkurve folgt bei Überschreiten dieses Kippbereiches einer anderen Geometrie und entspricht einem Kreisbogen mit größerem Radius, einer Geraden oder Parabel. Bei einem Kippbereich über ± 15° wandert der Rollmittelpunkt auf einem Kreisbogen entsprechend der Kipprichtung des Ofengefäßes.

Außerhalb des Kippbereiches geht die Kreisbogenform der Rollwiegen im Bereich des Nockens in eine Gerade über.

In einer alternativen Ausführung geht außerhalb des Kippbereiches die Kreisbogenform der Rollwiegen im Bereich des Nockens in einen konkaven oder konvexen oder parabelförmigen Bogen über.

Bei beiden Ausführungen gleitet der Nocken der Rollwiege nach Überschreiten der ± 15 °-Position des Ofengefäßes an der Laufrolle an der Hubzylinderseite entlang, der Gefäßrahmen wird durch den Hydraulikzylinder einseitig angehoben und das Ofengefäß kann vollständig entleert werden, wobei sich die Position der Bodenabstichöffnung während dieses Entleerungsvorganges nur unwesentlich verändert.

Beim Kippen des Gefäßes zum Abschlacken bewegt sich der Nocken der Rollwiege nach Verlassen der Nullstellung des Gefäßrahmens Richtung Laufrolle an der Abstichseite. Der Nocken ist in dieser Phase an dem Kippvorgang nicht beteiligt. Die Rollwiege liegt während der Hubbewegung des Hydraulikzylinders auf beiden Laufrollen auf.

Ein Ausführungsbeispiel der Erfindung wird an Hand von schematischen Zeichnungen näher erläutert. Es zeigen:
- Fig. 1: die Seitenansicht eines Gleichstromlichtbogenofens mit Bodenelektrode und mit einer Rollenkippvorrichtung nach dem Stande der Technik,
- Fig. 2: einen Ofen wie vor, jedoch mit den Kippositionen des Ofens in 0°-, + 10°- und + 25°Stellung,
- Fig. 3: die Seitenansicht eines Ofens mit einer erfindungsgemäßen Rollenkippvorrichtung,
- Fig. 4: den erfindungsgemäßen Ofen in der + 10°-Kippstellung,
- Fig. 5: den erfindungsgemäßen Ofen in der + 25°-Kippstellung,
- Fig. 6: den erfindungsgemäßen Ofen in übereinander dargestellten Kippstellungen 0°, + 10° und + 25°.

Fig. 1 zeigt die Seitenansicht eines Gleichstromlichtbogenofens mit einer an der tiefsten Stelle im Herdboden (18) angeordneten Bodenelektrode (Anode) (13).

Der Oberteil des Lichtbogenofens besteht aus einem teilweise wassergekühlten Gefäß (1), auf dem der Deckel (16) mit der Öffnung (17) für die Graphitelektrode (Kathode) aufliegt. In das wassergekühlte Gefäß (1) ist eine kreisbogenförmige, wassergekühlte Öffnung (15) zur Aufnahme einer Schrottschurre (14) eingearbeitet. An diese Öffnung (15) wird eine nicht dargestellte Abgassammelleitung angeschlossen, in der die Schrottschurre (14), die eine Schwingförderrinne sein kann, gelagert ist.

Der untere Teil des Lichtbogenofens besteht aus dem Gefäßrahmen (3), der auf zwei Rollwiegen (4) aufliegt und mit diesen unlösbar verbunden ist.

Die beiden Rollwiegen (4) sind jeweils auf den Laufrollen (6a, 6b) drehbar gelagert. Die Laufrollen (6a, 6b) sind wiederum im Fundamentrahmen (7) auf dem Ofenfundament (8) befestigt. Das gesamte Ofengefäß (1) wird durch eine hydraulische Kippvorrichtung (9) geschwenkt, wobei die Rollwiegen (4) auf den Laufrollen (6a, 6b) gleiten.

Die Bodenabstichöffnung (2) für den Stahlabstich in eine Stahlgießpfanne (11) befindet sich an der äußeren linken Seite des Herdbodens (18).

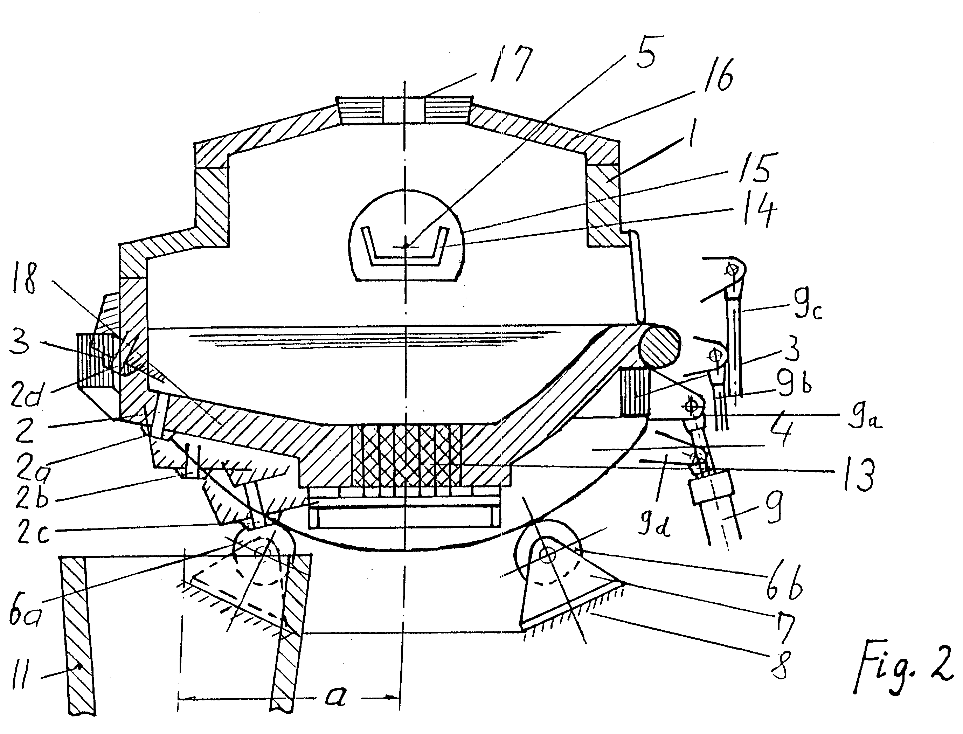

In Fig. 2 ist eine Reihe der möglichen Kippositionen des Lichtbogenofens dargestellt, wobei die Stellung der Bodenabstichöffnung (2) von der Stellung des Kippzylinders (9) bestimmt wird. Die Positionen (2a und 9a) zeigen die 0°-, die Positionen (2b und 9b) die + 10°- und die Positionen (2c und 9c) die + 25°-Stellung an.

Die sogenannte Abschlackposition bei - 10° Kippstellung für das Abfließen der Schlacke während des Schmelz- und Feinungsprozesses wird bei den Positionen (2d und 9d) erreicht.

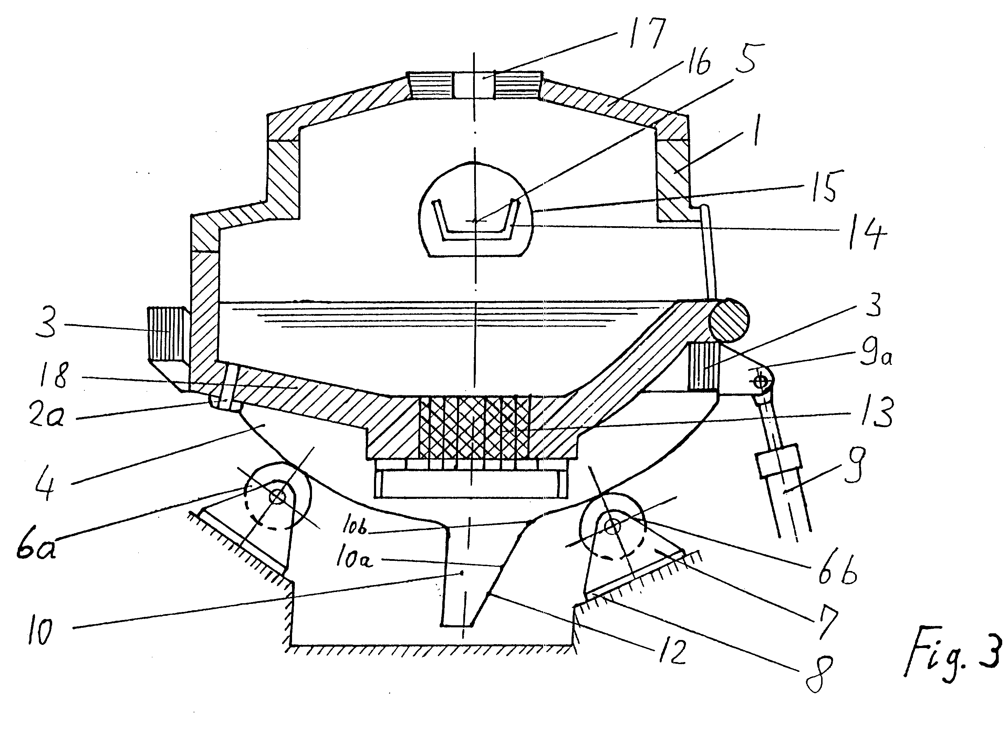

Aus Fig. 3 ist in der Seitenansicht die erfindungsgemäße Kippvorrichtung zu erkennen. An der auf den beiden Laufrollen (6a, 6b) gelagerten Rollwiege (4) ist mittig ein Nocken (10) angebracht, dessen Kontur auf der Seite der Bodenabstichöffnung (2) senkrecht und parallel zur Mittelachse des Rollpunktes (5) verläuft. Die Abrollkurve (12) des Rollwiegennockens (10) verläuft zunächst in einer schrägen Geraden (10a), die sich später an den Kreisbogenradius der Rollwiege (4) anschmiegt.

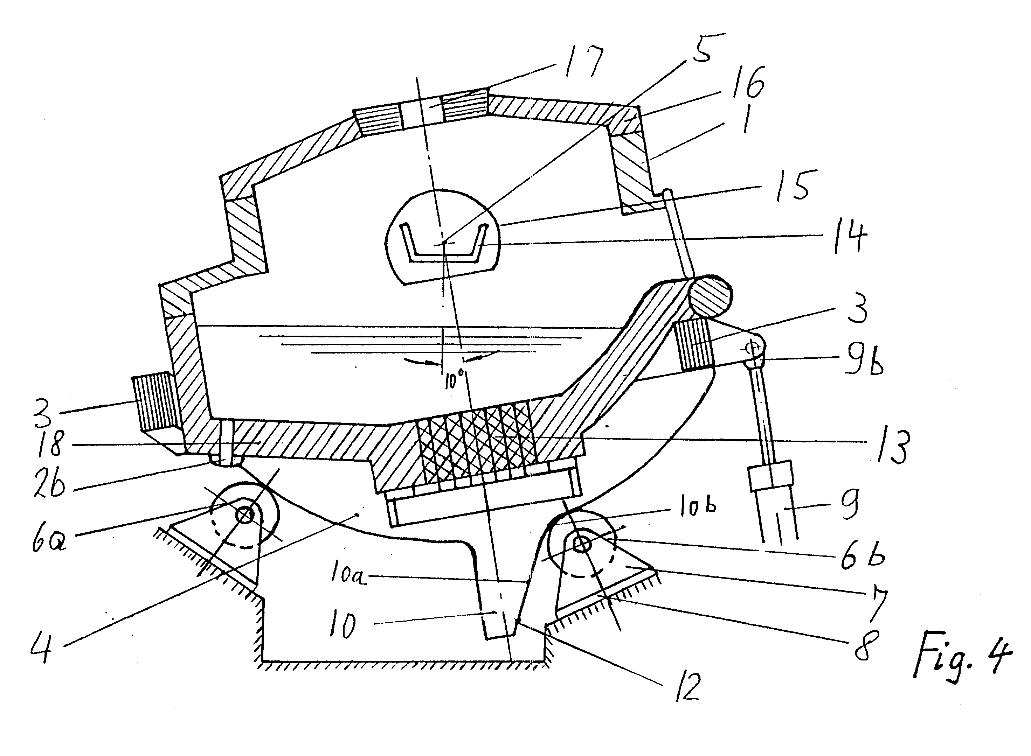

Fig. 4 zeigt den Gleichstromlichtbogenofen in der + 10°-Kippstellung. Bis zu der Stellung (2b) der Bodenabstichöffnung wird der Ofen während des Stahlabstiches gekippt, wobei ein Rest des Stahles als ständiger Sumpf im Ofen verbleibt. Die Rollwiege (4) rollt auf den Laufrollen (6a, 6b) so weit ab, bis der Radius (10b) des Nockens (10) die Laufrolle (6b) erreicht hat. Die Schrottschurre (14) verbleibt in unveränderter Lage am Rollmittelpunkt (5), während die seitliche Öffnung (15) die Kippbewegung des Ofengefäßes (1) mitvollzieht.

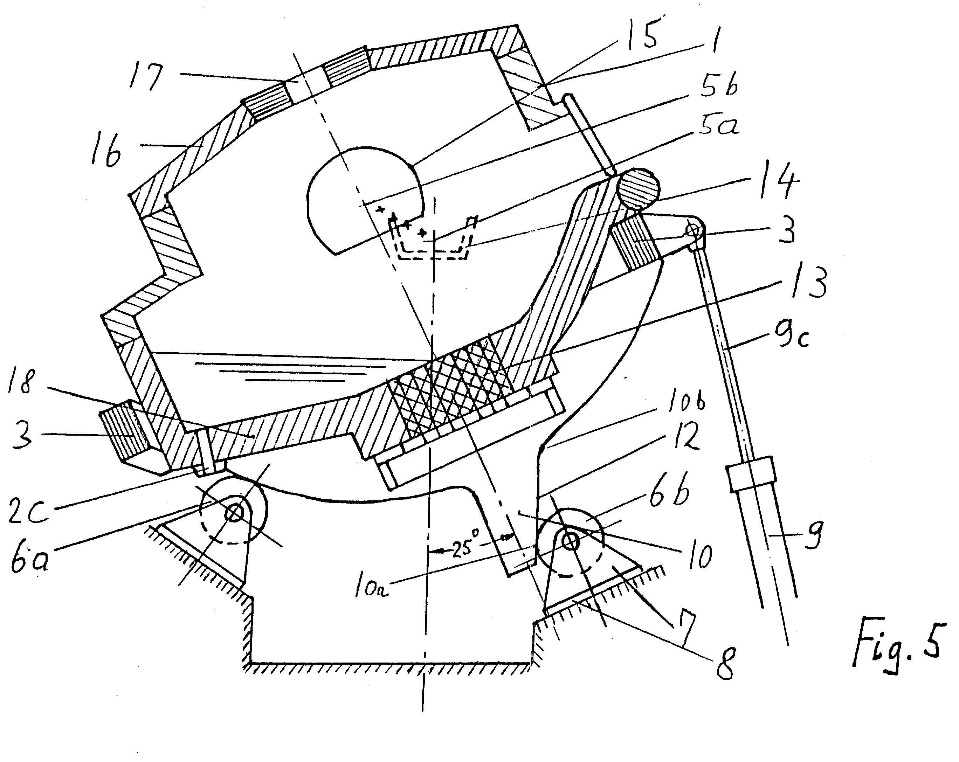

Fig. 5 zeigt den Gleichstromlichtbogenofen in der + 25°-Kippstellung (9c), bei der der Ofen über die Bodenabstichöffnung (2c) vollständig entleert werden kann, um Inspektionen am Herdboden (18) und vor allem an der Bodenelektrode (13) durchführen zu können. Das Ofengefäß (1) wird durch den hydraulischen Kippzylinder (9) so weit angehoben, daß die Rollwiege (4) von der Laufrolle (6b) abhebt. Damit die Stabilität des Unterofens (3, 4) beim Kippen über den + 10°-Bereich hinaus nicht verloren geht, gleitet der Nocken (10) an der Laufrolle (6b) entlang und führt dadurch die Rollwiege (4) sicher auf den Laufrollen (6a).

Parallel zu dem Kippvorgang verschiebt sich der Rollmittelpunkt (5a) in die Position (5b), die seitliche Öffnung (15) wandert, wie das gesamte Gefäß (1), entsprechend der Kippbewegung mit.

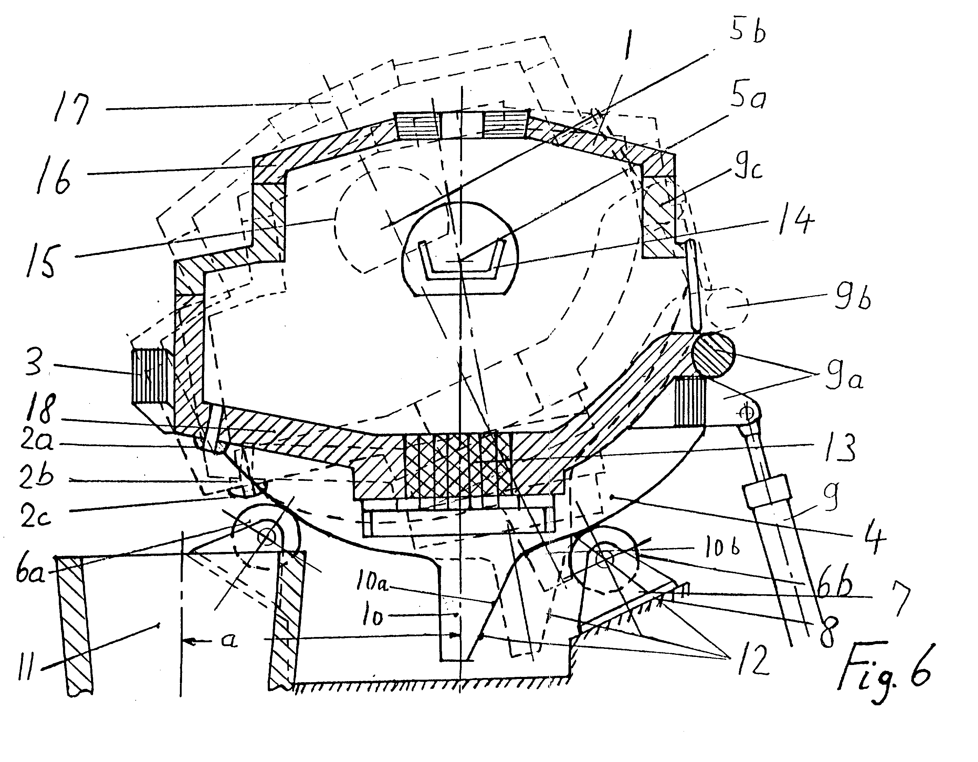

Die Position der Bodenabstichöffnung (2a) ändert ihre Lage während des Kippvorganges bis in die + 25°-Stellung nur unwesentlich. Wie in Fig. 6 zu erkennen ist, liegen die Position (2b) bei + 10°-Kippstellung und die Position (2c) der Bodenabstichöffnung bei der + 25°-Kippstellung nahezu übereinander.

Die Stahlgießpfanne (11) kann in einen Abstand "a" während des vollständigen Stahlabstichs positioniert werden. Wärmestrahlungen des Stahles aus der Pfanne (11) treten senkrecht nach oben und erreichen nur das Unterteil des Ofengefäßes im Bereich der Bodenabstichöffnung (2c) und nicht die Bodenelektrode (13) mit den zugehörigen Stromanschlüssen, Kühlleitungen, etc..

In Fig. 6 sind ferner die verschiedenen Kippositionen des Ofengefäßes (1), ausgehend von der O°-Kippstellung (2a, 9a) bis zur + 25°-Kippstellung (2c, 9c) dargestellt. Die Abrollkurve des Rollwiegennockens (12) gleitet entsprechend der Kippstellung des Ofengefäßes (1) an der Laufrolle (6b) entlang und überträgt einen Teil der Kräfte, die aus dem Gewicht von Ofen und Inhalt herrühren, in die Laufrolle (6b).

### Bezugsziffernliste:

- 1: Ofengefäß
- 2: Bodenabstichöffnung
- 2a: Bodenabstichöffnung in Nullstellung (Chargieren, Schmelzen)
- 2b: Bodenabstichöffnung in + 10°-Stellung (Abstechen)
- 2c: Bodenabstichöffnung in + 25°-Stellung (Entleeren)
- 2d: Bodenabstichöffnung in - 10°-Stellung (Abschlacken)
- 3: Gefäßrahmen
- 4: Rollwiege
- 5: Rollmittelpunkt des Lichtbogenofens
- 5a: Lage des Rollmittelpunktes zwischen ± 5° - ± 15° Kippstellung
- 5b: Lage des Rollmittelpunktes in der + 25°-Kippstellung
- 6a: Laufrolle an Abstichseite
- 6b: Laufrolle an Abschlackseite
- 7: Fundamentrahmen
- 8: Ofenfundament
- 9: Kippzylinder (hydraulischer Kraftantrieb)
- 9a: Kippzylinder in 0°-Kippstellung
- 9b: Kippzylinder in + 10°-Kippstellung
- 9c: Kippzylinder in + 25°-Kippstellung
- 9d: Kippzylinder in - 10°-Kippstellung
- 10: Nocken an der Rollwiege
- 10a: Gerade
- 10b: Radius
- 11: Stahlgießpfanne
- 12: Abrollkurve am Rollwiegennocken
- 13: Bodenelektrode (Anode)
- 14: Schrottschurre (Einrichtung zum Einbringen von Schrott)
- 15: Seitliche Öffnung in 1
- 16: Wassergekühlter Deckel von 1
- 17: Öffnung für Graphitelektrode (Kathode)
- 18: Herdboden

## Patentansprüche

1. Kippvorrichtung für einen Gleichstromlichtbogenofen mit außermittiger Bodenabstichöffnung und die Kippbewegung mitmachenden Elektroden, dessen Ofengefäß eine seitliche Öffnung und eine Einrichtung zum kontinuierlichen Einbringen von Schrott aufweist, wobei die Kippvorrichtung aus unterhalb des Gefäßrahmens angeordneten Rollwiegen besteht, die auf fest auf dem Fundamentrahmen des Ofenfundamentes angebrachten Laufrollen gelagert sind und die mittels hydraulischer Kraftantriebe bewegbar sind,
dadurch gekennzeichnet,
- daß die Rollwiegen (4) unterseitig mit einem Nocken (10) versehen sind,
- daß die Rollwiegen (4) an ihren Anlagepunkten an den Laufrollen (6a, 6b) in einem Kippbereich aus der ± 0 °-Lage des Ofengefäßes zwischen ± 5 ° und ± 15 ° die Form eines Kreisbogens aufweisen, dessen Radius von dem Rollmittelpunkt (5) des Ofengefäßes (1) ausgeht,
- und daß außerhalb des Kippbereiches die Kreisbogenform der Rollwiegen (4) im Bereich des Nockens (10) in eine Gerade (10a) übergeht, deren Neigung zur Kreisbogentangente der Rollwiege (4) so gewählt ist, daß sich beim Abrollen der Rollwiege (4) durch den Kippzylinder (9) über den Nocken (10) die Lage der Bodenabstichöffnung (2) des Ofengefäßes (1) nicht oder nur geringfügig verändert.

2. Kippvorrichtung nach Anspruch 1,
dadurch gekennzeichnet,
daß der Nocken (10) am Übergang vom Kreisbogen der Rollwiegen (4) auf die Gerade (10a) einen Übergangsradius (10b) aufweist, der das 1,1-fache bis 3,0-fache des Radius der Laufrollen (6a, 6b) beträgt.

3. Kippvorrichtung für einen Gleichstromlichtbogenofen mit außermittiger Bodenabstichöffnung und die Kippbewegung mitmachenden Elektroden, dessen Ofengefäß eine seitliche Öffnung und eine Einrichtung zum kontinuierlichen Einbringen von Schrott aufweist, wobei die Kippvorrichtung aus unterhalb des Gefäßrahmens angeordneten Rollwiegen besteht, die auf feste auf dem Fundamentrahmen des Ofenfundamentes angebrachten Laufrollen gelagert sind und die mittels hydraulischer Kraftantriebe bewegbar sind,
dadurch gekennzeichnet,
- daß die Rollwiegen (4) unterseitig mit einem Nocken (10) versehen sind,
- daß die Rollwiegen (4) an ihren Anlagepunkten an den Laufrollen (6a, 6b) in einem Kippbereich aus der ± 0 °-Lage des Ofengefäßes zwischen ± 5 ° und ± 15 ° die Form eines Kreisbogens aufweisen, dessen Radius von dem Rollmittelpunkt (5) des Ofengefäßes (1) ausgeht,
- und daß außerhalb des Kippbereiches die Kreisbogenform der Rollwiegen (4) im Bereich des Nockens (10) in einen konkaven oder konvexen oder parabelförmigen Bogen übergeht, der so gewählt ist, daß sich beim Abrollen der Rollwiege (4) durch den Kippzylinder (9) über den Nocken (10) die Lage der Bodenabstichöffnung (2) des Ofengefäßes (1) nicht oder nur geringfügig verändert.

4. Verfahren zum Entleeren eines mit einer Kippvorrichtung nach den Ansprüchen 1 bis 3 versehenen Gleichstromlichtbogenofens,
dadurch gekennzeichnet,
daß das Ofengefäß (1) beim Abstich der Schmelze in einem Kippbereich aus der ± 0 °-Lage von ± 5 ° bis ± 15 ° um einen feststehenden Rollmittelpunkt (5) gekippt wird und die Bodenabstichöffnung (2) dabei ihre Lage in die + 10 °-Kipp-Position (2b) bzw. + 25 °-Kipp-Position (2c) verschiebt und daß bei Überschreiten dieses Kippbereiches, wobei die schrottschurre (14) aus dem Ofengefäß (1) herausgezogen ist, die Bodenabstichöffnung (2) ihre Lage von der + 10 °-Kipp-Position (2b) in die + 25 °-Kipp-Position (2c) verschiebt, während der Rollmittelpunkt (5) von der ± 0 °-Position (5a) bis in die + 25 °-Position (5b) wandern kann.

## Claims

1. Tilting device for a direct current arc furnace with an eccentric base taphole and the electrodes of which cooperate with the tilting movement, the furnace vessel of which has a side aperture and a device for the continuous introduction of scrap, wherein the tilting device consists of roller cradles which are located below the vessel frame, which are mounted on running rollers which are fixed in a secure manner to the foundation plate of the vessel foundation and which can be moved by means of hydraulic mechanical drives,
characterised in that
- the roller cradles (4) are provided at their lower side with a cam (10);
- the roller cradles (4) have, at their points of abutment on the running rollers (6a,6b), when the furnace vessel is in a tilting range, out of the + 0 ° position, of between ± 5 ° and ± 15 °, the form of an arc, the radius of which extends from the roll centre (5) of the furnace vessel (1);
- and in that, outside the tilting range, the arcuate shape of the roller cradles (4) merges in the vicinity of the cam (10) into a straight line (10a), the inclination of which to the arcuate tangent of the roller cradle (4) is selected such that during the rolling of the roller cradle (4) by the tilting cylinder (9) via the cams (10) the position of the base taphole (2) of the furnace vessel (1) does not alter, or only alters slightly.

2. Tilting device according to Claim 1, characterised in that the cam (10) has, where the arc of the roller cradles (4) merges into the straight line (10a), a transfer radius (10b) which is from 1.1 to 3.0 times the radius of the running rollers (6a,6b).

3. Tilting device for a direct current arc furnace with an eccentric base taphole, and the electrodes of which participate in the tilting movement, the furnace vessel of which has a lateral aperture and a device for the continuous introduction of scrap, wherein the tilting device consists of roller cradles which are disposed below the vessel frame, which are mounted on running rollers which are mounted securely on the foundation plate of the vessel foundation and which can be moved by means of hydraulic mechanical drives;
characterised in that
- the roller cradles (4) are provided at their lower side with a cam (10);
- the roller cradles (4) have, at their points of abutment on the running rollers (6a,6b), when the furnace vessel is in a tilting range, out of the + 0 ° position, of between + 5 ° and ± 15 °, the form of an arc, the radius of which extends from the roll centre (5) of the furnace vessel (1);
- and in that the tilting range of the arc of the roller cradles (4) merges, in the vicinity of the cam (10) into a concave or convex or parabolic arc, which is selected such that when rolling the roller cradles (4) by means of the tilting cylinder (9) via the cam (10), the position of the base taphole (2) of the furnace vessel (1) does not alter at all, or only alters slightly.

4. Process for emptying a direct current arc furnace, provided with a tilting device according to Claims 1 to 3, characterised in that, when the melt is tapped, the furnace vessel (1) is tilted out of the + 0 ° position into a tilting range of from + 5 ° to + 15 ° about a fixed roll centre (5) and the base taphole (2) thus displaces its position into the + 10 ° tilting position (2b) or + 25 ° tilting position (2c) and in that, when this tilting range is exceeded, wherein the scrap chute (14) is drawn out of the furnace vessel (1), the base taphole (2) displaces its position from the + 10 ° tilting position (2b) into the + 25 ° tilting position (2c), whereas the roll centre (5) may travel from the + 0 ° position (5a) into the + 25 ° position (5b).

## Revendications

1. Dispositif de basculement pour un four à arc à courant continu qui comprend, dans le fond, une ouverture de coulée excentrée et des électrodes qui participent au mouvement de basculement, la carcasse du four présentant une ouverture latérale et un système pour enfourner de façon continue de la ferraille, le dispositif de basculement consistant en des berceaux de roulement, disposés en dessous du châssis de la carcasse, qui sont montés sur des galets de roulement placés de façon fixe sur le cadre du soubassement du four et que l'on peut déplacer au moyen de mécanismes hydrauliques d'entraînement,
caractérisé en ce que
- les berceaux de roulement (4) sont pourvus, du côté inférieur, d'une came (10),
- les berceaux de roulement (4) présentent la forme d'un arc de cercle à l'endroit de leurs points d'appui sur les galets de roulement (6a, 6b) dans une zone de basculement qui part de la position ± 0° de la carcasse du four pour atteindre une position comprise entre ± 5° et ± 15°, le rayon de cet arc de cercle partant du centre de roulement (5) de la carcasse de four (1),
- et en dehors de la zone de basculement, la forme en arc de cercle des berceaux de roulement (4) se transforme, dans la zone de la came (10), en une ligne droite (10a) dont l'inclinaison par rapport à la tangente à l'arc de cercle du berceau de roulement (4) est choisie de telle façon que la position de l'ouverture de coulée de fond (2) de la carcasse du four (1) ne varie pas ou ne varie que très légèrement lorsqu'on fait rouler le berceau de roulement (4), au moyen du vérin de basculement (9), à l'aide de la came (10).

2. Dispositif de basculement selon la revendication 1, caractérisé en ce que
la came (10), au passage de cercle du berceau de roulement (4) sur la droite (10a) un rayon de transition (10b) qui est égal à une valeur de 1,1 fois à 3,0 fois le rayon des galets de roulement (6a, 6b).

3. Dispositif de basculement pour un four à arc à courant continu qui comprend, dans le fond, une ouverture de coulée excentrée et des électrodes qui participent au mouvement de basculement, la carcasse du four présentant une ouverture latérale et un système pour enfourner de façon continue de la ferraille, le dispositif de basculement consistant en des berceaux de roulement, disposés en dessous du châssis de la carcasse, qui sont montés sur des galets de roulement placés de façon fixe sur le cadre du soubassement du four et que l'on peut déplacer au moyen de mécanismes hydrauliques d'entraînement,
caractérisé en ce que
- les berceaux de roulement (4) sont pourvus, du côté inférieur, d'une came (10),
- les berceaux de roulement (4) présentent la forme d'un arc de cercle à l'endroit de leurs points d'appui sur les galets de roulement (6a, 6b) dans une zone de basculement qui part de la position ± 0° de la carcasse du four pour atteindre une position comprise entre ± 5° et ± 15°, le rayon de cet arc de cercle partant du centre de roulement (5) de la carcasse de four (1),
- et en dehors de la zone de basculement, la forme en arc de cercle des berceaux de roulement (4) se transforme, dans la zone de la came (10), en un arc concave ou convexe ou ayant la forme d'une parabole , qui est choisi de telle façon que la position de l'ouverture de coulée du fond (2) de la carcasse de four (1) ne varie pas ou ne varie que très légèrement lorsqu'on fait rouler le berceau de roulement (4), au moyen du vérin de basculement (9), à l'aide de la came (10).

4. Procédé pour vider un four à arc à courant continu pourvu d'un dispositif de basculement selon les revendications 1 à 3,
caractérisé en ce qu'
on bascule la carcasse de four (1), lors de la coulée de la masse en fusion, dans une zone de basculement et en partant de la position ± 0°, de ± 5° à ± 15° autour d'un centre de roulement fixe (5), et l'ouverture de coulée du four (2) a dans ce cas sa position qui se déplace dans la position de basculement (2b) de + 10° ou dans sa position de basculement de + 25° et lors du dépassement de cette zone de basculement, la goulotte pour la ferraille (14) étant retirée de la carcasse de four (1), l'ouverture de coulée dans le fond (2) a sa position qui se déplace de la position de basculement (2b) de + 10° à la position de basculement (2c) de + 25°, tandis que le centre de roulement (5) peut passer de la position (5a) ± 0° jusqu'à la position (5b) + 25°.
